## Europäisches Patentamt
## European Patent Office
## Office européen des brevets

(11) Veröffentlichungsnummer: **0 453 880 A2**

(19)
(12)

## EUROPÄISCHE PATENTANMELDUNG

(21) Anmeldenummer: **91105736.2**

(22) Anmeldetag: **11.04.91**

(51) Int. Cl.⁵: **G06F 15/70**

(30) Priorität: **26.04.90 DE 4013308**

(43) Veröffentlichungstag der Anmeldung:
**30.10.91 Patentblatt 91/44**

(84) Benannte Vertragsstaaten:
**CH DE FR GB LI**

(71) Anmelder: **Firma Carl Zeiss**

**W-7920 Heidenheim (Brenz)(DE)**

(84) **CH DE FR LI**

(71) Anmelder: **CARL-ZEISS-STIFTUNG, HANDELND ALS CARL ZEISS**

**W-7920 Heidenheim(DE)**

(84) **GB**

(72) Erfinder: **Freischlad, Klaus, Dr.**
**Brandweg 4**
**W-7080 Aalen(DE)**

(54) Verfahren zur optischen Untersuchung von Prüflingen.

(57) Die Erfindung bezieht sich auf ein Verfahren zur optischen Untersuchung von Prüflingen anhand streifengebender Meßverfahren. Sie ermöglicht die zuverlässige Sprungstellenbeseitigung auch bei stark verrauschten Meßdaten. Es werden aus den Signalen des Kamerasensors (9a) die Differenzen der Phasenwerte sowohl zeilenweise als auch spaltenweise benachbarter Datenpunkte in Subtraktionseinheiten (15, 17) berechnet und in einem Speicher (19a, 19b) abgespeichert. Ein Filter 2 (21) untersucht das Vektorfeld dieser Phasendifferenzen auf lokale Wirbelfreiheit. Solche Gebiete, in denen die Wirbelfreiheit nicht erfüllt ist, werden maskiert. Anschließend berechnet ein Filter 3 (22) die den Wegintegralen entsprechenden Summen um die Ränder dieser maskierten Teilfelder. Teilfelder, für die dieses Wegintegral nicht verschwindet, werden derart vereinigt, daß die Wegintegrale um die vereinigten Teilfelder verschwindet. Aus den Differenzen der Phasenwerte werden dann in den nicht maskierten Datenpunkten durch Wegintegration endgültige Phasenwerte berechnet. Diese endgültigen Phasenwerte sind vom Integrationsweg unabhängig.

Fig.1b

EP 0 453 880 A2

Die Erfindung betrifft ein Verfahren zur optischen Untersuchung von Prüflingen entsprechend dem Oberbegriff des Anspruchs 1.

Zur optischen Untersuchung von Prüflingen sind sehr viele verschiedene Verfahren bekannt. Die Interferometrie bildet eine Gruppe unter diesen Verfahren.

Bei interferometrischen Oberflächenuntersuchungen werden eine an eine Objektoberfläche reflektierte Lichtwelle und eine an einer Referenzfläche reflektierte Lichtwelle interferenzfähig überlagert. Es entsteht ein Helligkeitsmuster, in dem die Information über die Abweichungen der Objektoberfläche von der Referenzfläche enthalten ist. Dieses Helligkeitsmuster wird von einer Kamera aufgenommen.

Interferometrische Untersuchungen werden jedoch auch in Transmission durchgeführt. Dazu wird ein Lichtstrahl in einen Meß- und in einen Referenzteil aufgeteilt. Der Meßstrahl durchleuchtet den transparenten Prüfling. Anschließend werden beide Strahlengänge wieder interferenzfähig überlagert. Es entsteht wieder ein Helligkeitsmuster, das von einer Kamera aufgenommen wird.

Aus dem Bild des Helligkeitsmusters werden in jedem Punkt des Kamerabildes die zu den Helligkeiten gehörenden Phasenwerte berechnet und zu einem Phasenbild zusammengestellt. Für die Berechnung dieser Phasenwerte sind selbst eine Vielzahl verschiedener Verfahren bekannt. Eine gute Übersicht über einen Teil dieser Verfahren sowie über deren Vor- und Nachteile ist in der Disseration von B. Dörband, Universität Stuttgart, 1986, gegeben.

Wegen der Periodizität der Interferenzgleichung kann der zu einer Helligkeit gehörende Phasenwert jedoch nur stets bis auf ein ganzzahliges Vielfaches der Zahl $2\pi$, also Modulo $2\pi$, berechnet werden. Setzt man dieses unbekannte ganzzahlige Vielfache gleich Null, so treten auch unter der Voraussetzung, daß die Objektoberfläche stetig ist, in den Phasenbildern sogenannte Sprungstellen auf. An diesen Sprungstellen ist die Differenz der berechneten Phasenwerte benachbarter Punkte betragsmäßig größer als die Zahl $\pi$. Zur Bestimmung der Konturen der Prüflingsoberfläche bzw. der Abweichungen des Prüflings von einem Referenzkörper ist eine Bestimmung der ganzzahligen Vielfachen, eine sogenannte Sprungstellenbeseitigung, nötig.

Ein bekanntes Verfahren zur Sprungstellenbeseitigung für den Fall, daß die Kamera das Bild des Musters lediglich entlang einer Zeile aufzeichnet, ist von K. Itoh, Applied Optics, 21, 2470, (1982) beschrieben. Es werden demnach zunächst die Differenzen der Phasenwerte benachbarter Punkte des Kamerabildes berechnet. Nach dem Abtasttheorem müssen diese Differenzen betragsmäßig kleiner als $\pi$ sein, so daß Sprungstellen, an denen ja die Differenz betragsmäßig größer als $\pi$ ist, eindeutig identifiziert werden können. An den Sprungstellen werden dann den Differenzen so häufig die Zahl $2\pi$ hinzu addiert bzw. von ihnen abgezogen, daß diese bereinigten Differenzen der Phasenwerte zwischen $-\pi$ und $+\pi$ liegen. Die Differenzen werden also Modulo $2\pi$ dargestellt. Durch Integration dieser Differenzen der Phasenwerte über das Phasenbild erhält man schließlich eine von Sprungstellen bereinigte Phasenkarte. Bei den Phasenwerten dieser Phasenkarte ist also das ganzzahlige Vielfache der Zahl $2\pi$ bestimmt und es können die Abweichungen der Objektoberfläche von der Referenzfläche bzw. des Prüflings von einem Referenzkörper eindeutig berechnet werden.

Eine Erweiterung dieses Verfahrens auf zweidimensionale Kamerabilder ist von D.C.Ghiglia et al., Journal of the Optical Society of America, A Vol. 4, Seite 267, (1987) beschrieben worden. Es werden dann die Differenzen der Phasenwerte sowohl der zeilen- als auch der spaltenweise benachbarten Datenpunkte berechnet und diese Differenzen Modulo $2\pi$ dargestellt. Eine endgültige Phasenkarte erhält man dann durch Wegintegration über die Differenzen der Phasenwerte oder durch eine iterative Integration mittels zellulärer Automaten, die jedoch wesentlich langsamer als die Wegintegration ist.

Wenn die Ausgangssignale der Kamera verrauscht sind, kann es jedoch zu Inkonsistenzen, d.h. zu falsch identifizierten Sprungstellen kommen. Die Differenz der Phasenwerte benachbarter Datenpunkte kann beispielsweise betragsmäßig größer als $\pi$ sein, obwohl keine Sprungstelle vorliegt. In diesem Fall wird das Wegintegral über die Differenzen der Phasenwerte und damit die Phasenkarte vom Integrationsweg abhängig, bzw. die Iteration mittels zellulärer Automaten konvergiert nicht. Die Folge davon ist eine globale Verfälschung der Phasenkarte, die durch Inkonsistenzen in einigen wenigen Datenpunkten mit verrauschten Meßwerten verursacht ist.

Zur Unterdrückung eines Teils der inkonsitenten Meßwerte berechnen die Autoren (Ghiglia et al.) die vorzeichenkorrekte Summe der Modulo $2\pi$ dargestellten Differenzen der Phasenwerte entlang eines geschlossenen Weges um jedes, jeweils aus vier Datenpunkten bestehende Teilfeld des Datenfeldes. Ist diese Summe ungleich Null, so werden alle vier Datenpunkte maskiert und bei der weiteren Auswertung nicht mehr berücksichtigt. Mathematisch gesehen wird von dem Vektorfeld der Modulo $2\pi$ dargestellten Differenzen der Phasenwerte die lokale Wirbelfreiheit gefordert. Die inkonsistenten Meßwerte in den maskierten Datenpunkten bleiben bei der Integration unberücksichtigt. Eine globale Verfälschung der Phasenkarte durch diese inkonsistenten Meßwerte ist dadurch ausgeschlossen. Jedoch wird durch dieses

2

Verfahren nur ein Teil der inkonsistenten Meßwerte erfaßt und bei der Integration unterdrückt. Dies räumen auch die Autoren des Aufsatzes ein. Eine globale Verfälschung der Phasenkarte durch nichterfaßte inkonsitente Meßwerte kann deshalb nicht ausgeschlossen werden.

Aus zahlreichen anderen Veröffentlichungen, u.a. aus der DE-OS 36 00 672 und der EP-OS 0 262 089, ist es bekannt, ein Streifenmuster auf die Objektoberfläche zu projizieren und das projizierte Streifenmuster mit einer Kamera aufzunehmen. Die Konturen der Objektoberfläche führen dann zu Verformungen des von der Kamera aufgenommenen Streifenmusters. Die Auswertung des Kamerabildes erfolgt analog zur Auswertung interferometrisch erzeugter Helligkeitsmuster, indem zunächst aus den Helligkeiten zu jedem Punkt des Kamerabildes ein Phasenwert des Streifenmusters berechnet wird. Die berechneten Phasenwerte werden zu einem Phasenbild zusammengestellt. Auch dieses Phasenbild weist Sprungstellen auf, weil wiederum die Phasenwerte nur bis auf ein ganzzahliges Vielfaches der Zahl $2\pi$ berechnet werden können, und auch bei diesen Verfahren können Sprungstellen falsch identifiziert werden, wenn die Meßwerte verrauscht sind.

Es ist die Aufgabe der vorliegenden Erfindung, ein Verfahren nach dem Oberbegriff des Anspruchs 1 anzugeben, das eine Unterdrückung weiterer, mit den bekannten Verfahren nicht erfaßter inkonsitenter Meßwerte ermöglicht und dadurch die Zuverlässigkeit der berechneten Phasenkarten erhöht.

Diese Aufgabe wird erfindungsgemäß dadurch gelöst, daß jeweils eine zweite vorzeichenkorrekte Summe der Modulo $2\pi$ dargestellten Differenzen der ersten Phasenwerte auf einem Weg um die maskierten Teilfelder herum berechnet wird, und daß solche Teilfelder, für die diese zweite Summe nicht verschwindet, durch Maskierung der zwischen diesen Teilfeldern liegenden Datenpunkte zu einem vereinigten Teilfeld derart verbunden werden, daß diese zweite Summe um das vereinigte Teilfeld herum verschwindet.

Es wird also zunächst wie von Ghiglia et.al. beschrieben, das zweidimensionale Datenfeld in eine Vielzahl von Teilfeldern eingeteilt und eine erste vorzeichenkorrekte Summe der Modulo $2\pi$ dargestellten Differenzen der Phasenwerte auf einem geschlossenen Weg um jedes Teilfeld herum berechnet. Solche Teilfelder, für die diese Summe nicht verschwindet, werden maskiert, wodurch in dem zweidimensionalen Datenfeld Löcher erzeugt werden, in denen keine Meßwerte zur Auswertung zur Verfügung stehen. Durch die zweite vorzeichenkorrekte Summe der Differenzen werden die Löcher in zwei Klassen eingeteilt, in solche für die die zweite Summe verschwindet und in solche für die die zweite Summe nicht verschwindet. Das Verschwinden dieser zweiten Summe ist ein Zeichen dafür, daß die beobachtete Inkonsistenz der Meßwerte in dem maskierten Teilfeld lokalisiert ist. Andernfalls, wenn diese zweite Summe nicht verschwindet, ist die beobachtete Inkonsistenz der Meßwerte nicht in dem maskierten Teilfeld lokalisiert sondern sie ist auf mehrere Teilfelder delokalisiert. Durch Maskierung der zwischen solchen Löchern der letzteren Klasse liegenden Datenpunkte werden diese Löcher derart vereinigt, daß die vereinigten Löcher zur ersten Klasse gehören, und die Inkonsistenzen der Meßwerte in diesen vereinigten Teilfeldern lokalisiert sind.

Wenn es nur noch Löcher der ersten Klasse gibt, für die die zweite Summe der Differenzen verschwindet, so ist das Integral über diese Differenzen vom Integrationsweg unabhängig, und es kann die Phasenkarte eindeutig berechnet werden. Eine globale Verfälschung der Phasenkarte durch schlechte, beispielsweise verrauschte Meßwerte in einzelnen Datenpunkten ist dadurch ausgeschlossen.

Es ist immer möglich, alle Teilfelder geeignet untereinander und gegebenenfalls mit dem äußeren Rand des zweidimensionalen Datenfeldes so zu vereinigen, daß die vereinigten Teilfelder zur ersten Klasse gehören. Um jedoch nicht unnötig viele Datenpunkte zu maskieren, sollte eine zusätzliche Summe der Modulo $2\pi$ dargestellten Differenzen der ersten Phasenwerte entlang des geschlossenen Weges über die äußeren unmaskierten Datenpunkte des zweidimensionalen Datenfeldes berechnet werden. Der Wert dieser weiteren Summe zeigt an, ob der äußere Rand des zweidimensionalen Datenfeldes überhaupt mit einem der inneren Teilfelder, für die die zweite Summe nicht verschwindet, zu vereinigen ist.

Vorteilhafterweise wird zur Vereinigung der Teilfelder untereinander oder der Teilfelder mit dem äußeren Rand des zweidimensionalen Datenfeldes der kürzeste Weg zwischen diesen Teilfeldern gewählt. Dadurch ist sichergestellt, daß nicht mehr Datenpunkte maskiert werden, als unbedingt nötig ist.

Die Teilfelder, in die das zweidimensionalen Datenfeld eingeteilt wird, sollten jeweils vier Datenpunkte enthalten, wobei die ersten beiden Datenpunkte zeilenweise benachbart und die beiden anderen Datenpunkte jeweils zu einem der ersten beiden Datenpunkte spaltenweise benachbart sind. Dadurch ist eine sehr feine Einteilung des zweidimensionalen Datenfeldes in Teilfelder gewährleistet.

Wenn der äußere Rand des zweidimensionalen Datenfeldes sehr unregelmäßig ist, sollten solche Datenpunkte, die nicht mindestens zu einem Teilfeld gehören, maskiert werden.

Zur weiteren Auswertung wird zu jedem unmaskierten Datenpunkt ein endgültiger Phasenwert berechnet, wobei sich dieser endgültige Phasenwert durch Summation der Modulo $2\pi$ dargestellten Differenzen der ersten Phasenwerte entlang eines Weges über unmaskierte Datenpunkte von einem gemeinsamen Bezugspunkt zu dem jeweiligen Datenpunkt ergibt. Da durch die zuvor beschriebenen Maßnahmen alle Inkonsistenzen innerhalb maskierter Teilfelder lokalisiert sind, sind diese endgültigen Phasenwerte von dem Weg, entlang dessen die Modulo $2\pi$ dargestellten Differenzen der Phasenwerte summiert werden, unabhängig und damit eindeutig. Solche Summationen sind wesentlich schneller ausführbar als die von Ghiglia et al. beschriebene iterative Integration.

Ausgehend von diesen endgültigen Phasenwerten in den unmaskierten Datenpunkten können dann durch Hinzuaddieren der entsprechenden Modulo $2\pi$ dargestellten Differenzen der ersten Phasenwerte endgültige Phasenwerte in den maskierten Datenpunkten berechnet werden. Die endgültigen Phasenwerte in den maskierten Datenpunkten sind allgemein nicht eindeutig, jedoch sind mehrdeutige Phasenwerte auf einzelne Punkte der Phasenkarte beschränkt.

Das von der Kamera aufgezeichnete Muster kann sowohl ein Interferogramm als auch ein auf den Prüfling projiziertes Helligkeitsmuster sein. In beiden Fällen kann das Meßlicht entweder am Prüfling reflektiert oder durch den Prüfling transmittiert sein.

Im folgenden werden Einzelheiten der Erfindung anhand der Zeichnungen näher erläutert. Im einzelnen zeigen

Fig. 1a      eine schematische Darstellung eines Interferometers zur Untersuchung von Prüflingsoberflächen;

Fig. 1b      eine schematische Darstellung einer Schaltung zur Auswertung eines Interferogramms;

Fig. 1c      ein Struktogramm der in den drei Filtern aus Fig. 1b ausgeführten Operationen;

Fig. 2      einen Ausschnitt von 4x4 Datenpunkten eines zweidimensionalen Datenfeldes und

Fig. 3a-c      ein Datenfeld von 10x7 Datenpunkten zur anschaulichen Erläuterung des erfindungsgemäßen Verfahrens in drei aufeinanderfolgenden Verfahrensschritten.

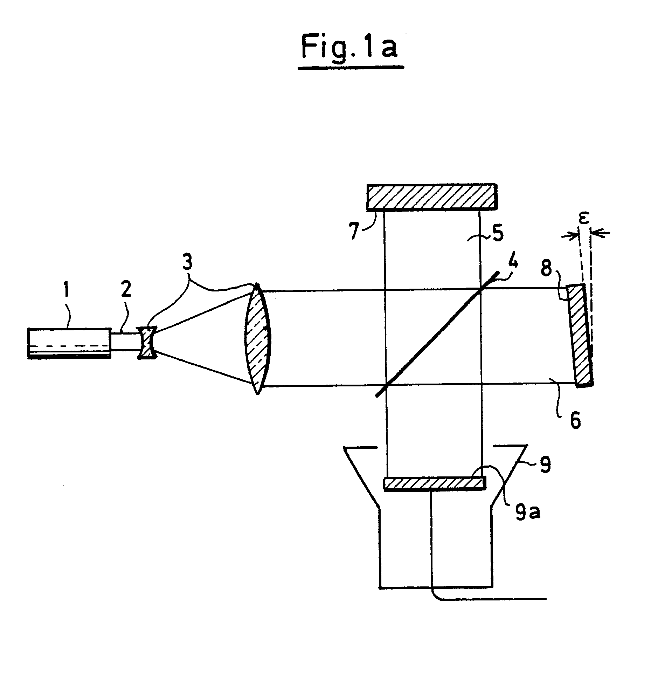

Die Anordnung in Figur 1a hat einen Laser (1), dessen Laserstrahl (2) in einem Teleskop (3) aufgeweitet wird. Ein Strahlteiler (4) lenkt den aufgeweiteten Laserstrahl in einen Meßstrahlengang (5) und in einen Referenzstrahlengang (6). Das an der Prüflingsoberfläche (7) reflektierte Licht des Meßstrahlenganges (5) und das an einem Referenzspiegel (8) reflektierte Licht des Referenzstrahlenganges (6) wird von dem Strahlteiler (4) zum Sensor (9a) der CCD-Kamera (9) gelenkt. Der Kamerasensor (8a) nimmt ein Interferogramm des an der Prüflingsoberfläche (7) reflektierten Lichts des Meßstrahlenganges und des an der Referenzfläche (8) reflektierten Lichts des Referenzstrahlenganges auf. In diesem Interferogramm ist die Information über die Abweichungen der Prüflingsoberfläche von der Referenzfläche enthalten.

Der Referenzspiegel (8) ist zur Erzeugung eine räumliche Trägerfrequenz ($f_o$) um einen kleinen Winkel ($\epsilon$) geneigt im Referenzstrahlengang (6) angeordnet. Die Lichtintensität I (x, y) des Interferogramms ist dann durch die Interferenzgleichung:

$$I (x, y) = a (x, y) + b (x, y) \cos (2\pi f_o x + w (x, y))$$

bestimmt. Dabei beschreibt a (x, y) einen gerätespezifischen "Gleichanteil", der beispielsweise durch Streulicht, Ungleichförmigkeit des Profils des Laserstrahls (2) oder eine ortsabhängige Empfindlichkeit des Kamerasensors (9a) verursacht wird. Lateral unterschiedliche Reflektivitäten der Prüflingsoberfläche (7) und der Referenzspiegel (8) werden durch die ortsabhängige Modulation b (x, y) beschrieben, und w (x, y) beschreibt, die zu den Konturen der Prüflingsoberfläche gehörigen Phasenwerte.

Die Phasenwerte w (x, y) werden nach der räumlichen Fourier-Transformations-Methode. die in der oben zitierten Dissertation von B. Dörband beschrieben ist, für jeden Punkt des Kamerabildes berechnet und zu einem Phasenbild zusammengestellt.

Die Phasenwerte können auch nach einer anderen Methode, beispielsweise nach dem ebenfalls von Dörband beschriebenen "Phase-stepping im Zeitbereich"-Verfahren, berechnet werden. Es wird dann aus mehreren Kamerabildern, zwischen deren Aufnahme der Referenzspiegel (8) jeweils parallel zur optischen Achse verschoben wird, ein Phasenbild erzeugt. Das Verfahren ist dadurch zwar etwas langsamer, jedoch lassen sich auch höhere Genauigkeiten erzielen.

Aufgrund der $2\pi$-Periodizität der Interferenzgleichung können aus den Lichtintensitäten I (x, y) des Interferogramms die Phasenwerte w (x, y) nur bis auf ein ganzzahliges Vielfaches der Zahl $2\pi$ bestimmt werden. Genauer gesagt, die berechneten Phasenwerte liegen zwischen $-\pi$ und $+\pi$. Überschreitet die Phasendifferenz zwischen den beiden interferierenden Teilstrahlengängen (5, 6) an einer Stelle die Zahl $\pi$, so weist das berechnete Phasenbild an dieser Stelle eine Sprungstelle auf, an der die Differenz der Phasenwerte w (x, y) benachbarter Punkte des Phasenbildes betragsmäßig größer als $\pi$ ist.

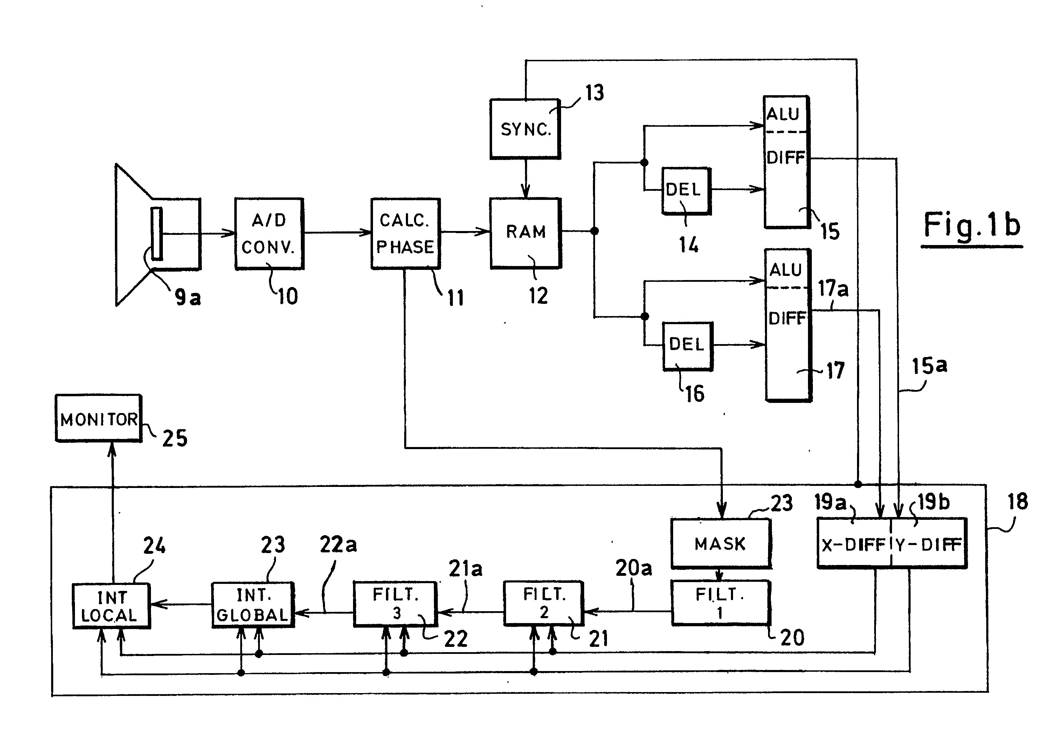

Zur Auswertung des von dem Kamerasensor (9a) aufgezeichneten Bildes werden die Ausgangssignale des Kamerasensors (9a) nach Fig. 1b in einem Analog/Digitalwandler (10) auf 8 Bit Datenbreite digitalisiert. Eine Recheneinheit (11) berechnet nach der räumlichen Fourier-Transformationsmethode, die in der oben

4

EP 0 453 880 A2

zitierten Dissertation von B. Dörband beschrieben ist, und auf die deshalb an dieser Stelle nicht näher eingegangen zu werden braucht, die zu jedem Datenpunkt des Kamerabildes gehörenden Phasenwerte. Bei zu geringem Kontrast des Kamerabildes in einem Datenpunkt, d.h. bei einer zu geringen Modulation b (x, y), wird dieser Datenpunkt in einem Maskenfeld, das in einem Speicher (23) angelegt ist, als ungültig gekennzeichnet. Jedem Datenpunkt ist ein binärer Speicherplatz des Speichers (23) zugeordnet. Eine logische 1 des Speicherplatzes kennzeichnet den zugehörigen Datenpunkt als gültig, während eine logische 0 den zugehörigen Datenpunkt ungültig kennzeichnet.

Die berechneten Phasenwerte werden anschließend in einem Bildspeicher (12) zwischengespeichert. Der Bildspeicher (12) dient lediglich als Pufferspeicher, auf den bei hinreichender Geschwindigkeit der nachfolgenden Operationen verzichtet werden kann.

Der Bildspeicher (12) wird mit einer festen, von einer Synchronisationseinheit (13) vorgegebenen Frequenz seriell ausgelesen. Die Ausgangssignale des Bildspeichers (12) werden den Eingängen zweier jeweils als Differenzierer ausgelegten arithmetisch logischen Einheiten (15, 17) zugeführt. In einem der beiden Eingangskanäle des ersten Differenzierers (17) ist eine Verzögerungsleitung (16) vorgesehen, deren verzögernde Wirkung gerade eine Periode der von der Synchronisationseinheit (13) vorgegebenen Frequenz beträgt. Dieser Differenzierer (17) bildet deshalb die Differenzen der Phasenwerte zeilenweise benachbarter Datenpunkte. Die Datenbreite der Ausgangssignale dieses Differenzierers (17) beträgt ebenso wie die Datenbreite der beiden Eingangskanäle 8 Bit. Die Differenz der Phasenwerte zeilenweise benachbarter Datenpunkte wird dadurch Modulo $2\pi$ dargestellt. Diese Modulo $2\pi$ dargestellten Differenzen der Phasenwerte zeilenweise benachbarter Datenpunkte werden in einem Speicher (19a) eines Rechners (18) abgespeichert.

In einem der beiden Eingangskanäle des zweiten Differenzieres (15) ist ebenfalls eine Verzögerungsleitung (14) vorgesehen. Jedoch beträgt die verzögernde Wirkung dieser Verzögerungsleitung (14) n-Perioden der von der Synchronisatonseinheit (13) vorgegebenen Frequenz. Dabei entspricht n der Anzahl der Datenpunkte in einer Zeile des Kamerasensors (9a). Der zweite Differenzierer (15) bildet daher die Differenz der Phasenwerte spaltenweise benachbarter Datenpunkte. Diese Differenzen werden wiederum Modulo $2\pi$ dargestellt, dadurch daß die Ausgangssignale dieses Differenzieres (15) die gleiche Datenbreite haben wie die Eingangssignale. Die Modulo $2\pi$ dargestellten Differenzen der Phasenwerte spaltenweise benachbarter Datenpunkte werden in einem Speicher (19b) des Rechners (18) abgespeichert.

Wenn die Mittelung über mehrere Phasenbilder erwünscht ist, kann noch in den Datenpfaden (15a, 17a) zwischen den Subtraktionseinheiten (15, 17) und den Speichern (19a, 19b) jeweils eine Additionseinheit und ein Bildspeicher vorgesehen sein. Bei einer Beschaltung dieser Einheiten gemäß der entsprechenden, am gleichen Tag von der Anmelderin eingereichten Patentanmeldung, können die Kamerabilder in Videoechtzeit gemittelt werden.

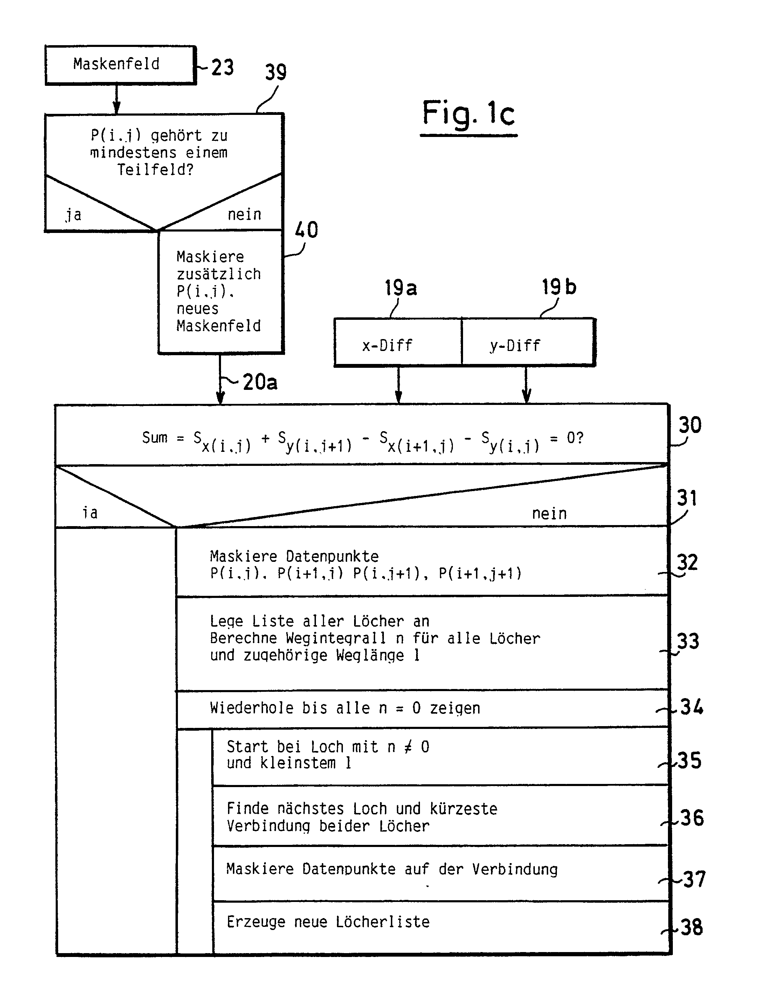

Das in dem Speicher (23) angelegte Maskenfeld wird durch drei hintereinander geschaltete Filter (20, 21, 22) modifiziert. Die Wirkung der Filter (20, 21, 22) läßt sich am einfachsten anhand des Struktogrammes in Fig. 1c erläutern. In einer ersten Filterstufe (20) wird jeder im Speicher (23) als gültig gekennzeichnete Datenpunkt P(i,j) daraufhin untersucht, ob er zu mindestens einem Teilfeld gehört (Operation 39), d.h. es wird untersucht, ob zum Datenpunkt P(i,j) mindestens die zu einem der vier Punktetripel

(P(i + 1,j), P(i,j + 1), P(i + 1,j + 1)),

(P(i + 1,j), P(i + 1,j-1), P(i,j-1))

(P(i,j-1), P(i-1,j-1), P(i-1,j)) und

(P(i-1,j), P(i-1,j + 1), P(i,j + 1)) gehörigen Datenpunkte alle im Maskenfeld als gültige Datenpunkte gekennzeichnet sind. Solche Datenpunkte, die nicht zu mindestens einem Teilfeld gehören, werden zusätzlich als ungültig gekennzeichnet, und das somit modifizierte Maskenfeld wird über den Datenpfad (20a) an den zweiten Filter (21) weitergeleitet. Im zweiten Filter (21) wird anschließend in einer arithmetischen Operation (30) für jedes von vier als gültig gekennzeichneten Datenpunkten ((P(i,j), P(i + 1,j), P(i,j + 1), P(i + 1,j-1)) aufgespannte Teilfeld die Summe

$$Sum_{(i,j)} = S_{x(i,j)} + S_{y(i,j + 1)} - S_{x(i + 1,j)} - S_{y(i,j)} \quad (1)$$

gebildet. Dabei sind

$$S_{x(i,j)} = (w_{(i,j + 1)} - w_{(i,j)}) \bmod 2\pi \quad (2)$$

die in dem Speicher (19a) abgespeicherten, Modulo $2\pi$ dargestellten Differenzen der Phasenwerte zeilenweise benachbarter Datenpunkte (P(i,j), P(i,j + 1)) und

5

$$S_{y(i,j)} = (w_{(i+1,j)} - w_{(i,j)}) \bmod 2\pi \qquad (3)$$

die in dem Speicher (19b) abgespeicherten, Modulo $2\pi$ dargestellten Differenzen der Phasenwert spaltenweise benachbarter Datenpunkte (P(i,j), P(i+1,j)). Eine logische Operation (31) kennzeichnet zusätzlich zu den bisher als ungültig gekennzeichneten Datenpunkten alle vier Datenpunkte P(i,j), P(i+1,j), P(i,j+1) und P(i+1,j+1) als ungültig, wenn die Summe (Sum) nicht verschwindet. Über den Datenpfad (21a) wird das entsprechend modifizierte Maskenfeld an den dritten Filter (22) weitergegeben.

Im dritten Filter (22) werden durch eine Operation (32), welche die als ungültig gekennzeichneten Datenpunkte maskiert, Löcher im Datenfeld erzeugt. Durch eine arithmetische Operation (33) wird eine Liste aller Löcher angelegt, das Wegintegral (n) über die Differenzen der Phasenwerte entlang der Lochberandungen für alle Löcher und die Länge des Integrationsweges, d.h. die Anzahl der bei der Integration aufsummierten Differenzen der Phasenwerte berechnet. Die Berechnung dieser Wegintegrale wird weiter unten noch näher erläutert. Anschließend wird eine Schleifenoperation (34) so lange durchgeführt, bis die Wegintegrale n für alle Löcher gleich Null sind. Innerhalb dieser Schleifenoperation (34) wird zunächst das Loch mit dem kürzesten Integrationsweg, also das Loch mit der kleinsten Lochberandung, für das der Wert des Integrals (n) ungleich null ist, gesucht (Operation 35). In einer darauffolgenden Operation (36) wird das nächste Loch und die kürzeste Verbindung zwischen beiden Löchern gesucht. Durch Maskierung der Datenpunkte auf dieser kürzesten Verbindung zwischen beiden Löchern werden die Löcher miteinander verbunden (Operation 37). Anschließend wird eine neue Löcherliste angelegt (Operation 38), in der das soeben erzeugte vereinigte Loch enthalten ist. Die Operationen (34 - 38) werden solange wiederholt, bis nur noch Löcher vorhanden sind, für die die Wegintegrale (n) über die Modulo $2\pi$ dargestellten Differenzen der Phasenwerte entlang der Lochberandungen verschwinden.

Das durch die drei Filter (20, 21, 22) modifizierte Maskenfeld gelangt über den Datenpfad (22a) zu einer Recheneinheit (23). In dieser Recheneinheit (23) werden endgültige Phasenwerte durch Wegintegration über die Modulo $2\pi$ dargestellten Differenzen der ersten Phasenwerte, die in den Speichern (19a, 19b) abgespeichert sind, in den unmaskierten Datenpunkten berechnet. Diese endgültigen Phasenwerte sind in den unmaskierten Datenpunkten unabhängig vom gewählten Integrationsweg. Ausgehend von diesen endgültigen Phasenwerten in den unmaskierten Datenpunkten werden in einer weiteren Recheneinheit (24) durch lokale Integration auch in den maskierten Datenpunkten endgültige Phasenwerte berechnet. Die endgültigen Phasenwerte in den zuvor maskierten Datenpunkten sind im allgemeinen nicht eindeutig, d.h. sie hängen vom Integrationsweg ab. Auf dem der Datenausgabe dienenden Monitor (25) können diese mehrdeutigen Phasenwerte in den maskierten Datenpunkte beispielsweise durch Dunkelsteuerung gekennzeichnet werden.

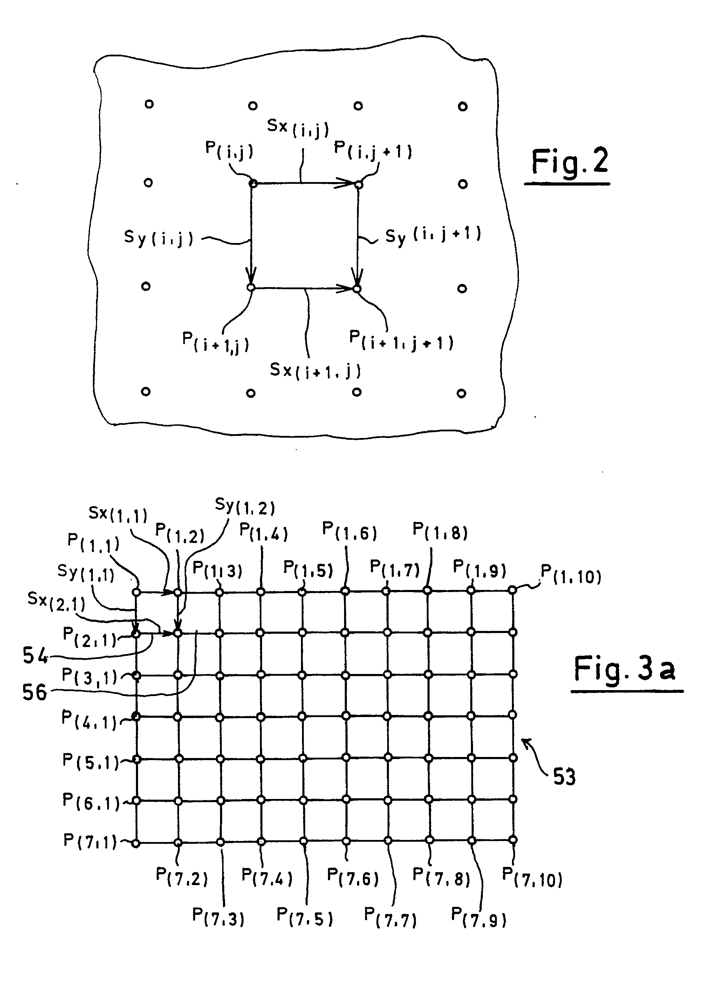

In der Fig. 2 ist ein Ausschnitt von 4x4 Datenpunkten eines zweidimensionalen Datenfeldes dargestellt. Die Datenpunkte werden durch Kreise symbolisiert. Besonders gekennzeichnet ist ein Datenpunkt P(i,j), von dem angenommen ist, daß er der j-te Datenpunkt in der i-ten Zeile des Datenfeldes ist. Der Datenpunkte P(i,j+1) ist zu dem Datenpunkt P(i,j) zeilenweise benachbart, während der Datenpunkt P(i+1,j) zu dem Datenpunkt P(i,j) spaltenweise benachbart ist. Der Datenpunkt P(i+1,j+1) ist zu dem Datenpunkt P(i,j+1) spaltenweise benachbart. Die Recheneinheit (11) in Fig. 1b berechnet zu jedem dieser Datenpunkte P(i,j), P(i,j+1), P(i+1,j), P(i+1,j+1) einen zugehörigen Phasenwert $w_{(i,j)}, w_{(i+1,j)}, w_{(i,j+1)}, w_{(i+1,j+1)}$. Die Modulo $2\pi$ dargestellten Differenzen dieser Phasenwerte $S_{x(i,j)}, S_{y(i,j)}, S_{x(i+1,j)}, S_{y(i,j+1)}$ sind in Fig. 2 durch Pfeile dargestellt. Die Pfeile deuten an, daß es sich bei diesen Differenzen um gerichtete Größen handelt. Diese Differenzen bilden im mathematischen Sinne ein Vektorfeld. Die Differenz $S_{x(i,j)}$ bildet die x-Komponente und die Differenz $S_{y(i,j)}$ die y-Komponente dieses Vektorfeldes im Datenpunkt P(i,j). Dementsprechend sind die Richtungen dieser Differenzen bei der Integration bzw. Summation zu berücksichtigen. Soll die vorzeichenkorrekte Summe dieser Modulo $2\pi$ dargestellten Differenzen um das durch die Datenpunkte P(i,j), P(i,j+1), P(i+1,j), P(i+1,j+1) aufgespannte Teilfeld des Datenfeldes berechnet werden, so ergibt sich diese Summe zu

$$Sum_{(i,j)} = S_{x(i,j)} + S_{y(i,j+1)} - S_{x(i+1,j)} - S_{y(i,j)} \qquad (1)$$

wobei vorausgesetzt ist, daß die Summation im Uhrzeigersinn erfolgt.

Zur anschaulichen Erläuterung des erfindungsgemäßen Verfahrens ist in den Fig. 3a-c ein Datenfeld (53) mit 10x7 Datenpunkten dargestellt. Wiederum sind die Datenpunkte durch Kreise symbolisiert. Besonders gekennzeichnet sind die Datenpunkte P(1,1) bis P(1,10) der ersten Zeile des Datenfeldes, die Datenpunkte P(1,1) bis P(7,1) der ersten Spalte des Datenfeldes sowie die Datenpunkte P(7,1) bis P(7,10) der letzten Zeile des Datenfeldes (53). Das Datenfeld (53) ist in ingesamt 70 quadratische Teilfelder eingeteilt, von denen eines in Fig. 3a mit (54) bezeichnet ist. Zu jedem dieser Teilfelder wird zunächst die

EP 0 453 880 A2

vorzeichenkorrekte Summe der Modulo $2\pi$ dargestellten Differenzen der Phasenwerte der jeweiligen Datenpunkte berechnet. So ergibt sich beispielsweise für das durch die Datenpunkte P(1,1), P(1,2), P(2,1) und P(2,2) aufgespannte Teilfeld (54) die Summe

$$Sum_{(1,1)} = S_{x(1,1)} + S_{y(1,2)} - S_{x(2,1)} - S_{y(1,1)} \quad (4)$$

und entsprechend für das durch die Punkte P(1,2), P(1,3), P(2,2) und P(2,3) aufgespannte Teilfeld (56) die Summe

$$Sum_{(1,2)} = S_{x(1,2)} + S_{y(1,3)} - S_{x(2,2)} - S_{y(1,2)} \quad (5)$$

wobei die Differenzen $(S_{x(i,j)}, S_{y(i,j)})$ entsprechend der Fig. 2 für i die Zahlen 1 - 10 und für j die Zahlen 1 - 7 eingesetzt sind. Diese Summen werden für alle Teilfelder (54, 56) in der Fig. 3a berechnet. Dies bedeutet im mathematischen Sinne, daß die Wirbel des Vektorfeldes mit den Komponenten $(S_x, S_y)$ in allen Teilfeldern (54, 56) des Datenfeldes (53) berechnet werden. Nur wenn alle Teilfelder wirbelfrei sind, sind die Meßwerte in allen Datenpunkte konsistent, und es können endgültige Phasenwerte durch Wegintegration über die Modulo $2\pi$ dargestellten Differenzen $(S_{x(i,j)}, S_{y(i,j)})$ eindeutig berechnet werden.

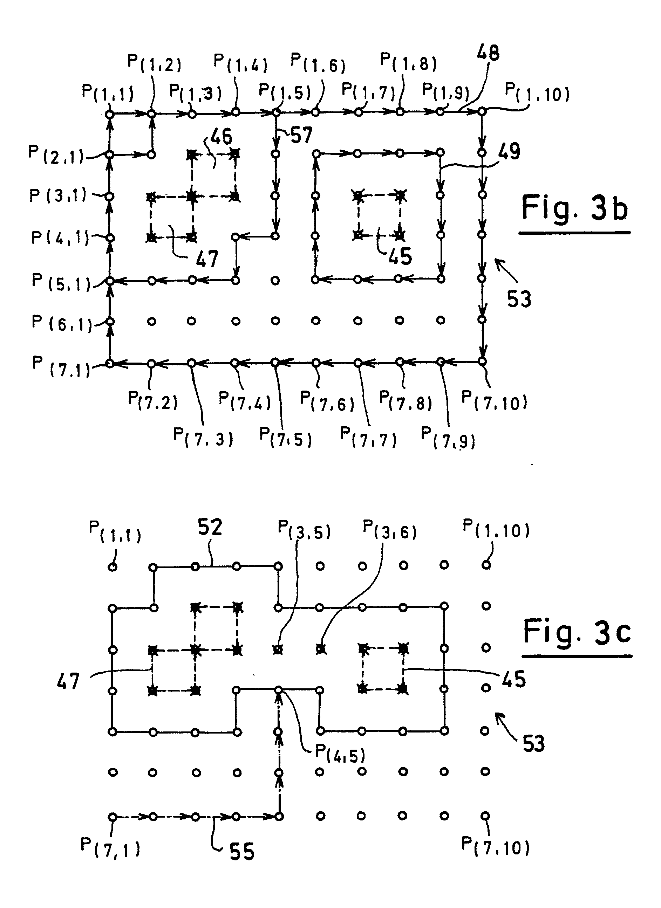

In der Fig. 3b ist das gleiche Datenfeld (53) dargestellt wie in der Fig. 3a. Auch die Bezeichnung der Datenpunkte ist mit der Bezeichnung in der Fig. 3a identisch. Es ist angenommen, daß die Summationen nach Fig. 3a lediglich für die drei Teilfelder (45, 46, 47) von Null abweichende Werte ergeben hat. Die zu den Teilfeldern (45, 46, 47) gehörigen Datenpunkte (P(2,3), P(2,4), P(3,4), P(3,3)) (P(3,2), P(3,3), P(4,3), P-(4,2)), (P(3,7), P(3,8), P(4,8), P(4,7)) werden durch den Filter (21) in Fig. 1b maskiert, was in der Fig. 3b durch Kreuze auf den genannten Datenpunkten angedeutet ist. Dadurch sind in den Datenfeldern gestrichelt gekennzeichnete Löcher entstanden. Es werden nun (Filter 3 in Fig. 1b) die den Wegintegralen entsprechenden Summationen entlang der Lochberandungen durchgeführt. Dies ist in der Fig. 3b durch die Pfeile angedeutet, d.h. es werden die Summe

$$n_1 = \sum_{j=2}^{4} S_{x(1,j)} + \sum_{i=1}^{3} S_{y(i,5)} - S_{x(4,4)} + S_{y(4,4)}$$
$$- \sum_{j=1}^{3} S_{x(5,j)} - \sum_{i=2}^{4} S_{y(i,1)} - S_{x(2,1)} - S_{y(1,2)} \quad (6)$$

entlang des Weges (57) um die Teilfelder (46, 47)
und die Summe

$$n_2 = \sum_{j=6}^{8} (S_{x(2,j)} - S_{x(5,j)}) + \sum_{i=2}^{4} (S_{y(i,9)} - S_{y(i,6)}) \quad (7)$$

entlang des Weges (49) um das Teilfeld (45) berechnet. Zusätzlich wird auch die dem Wegintegral um den Rand (48) des zweidimensionales Datenfeldes entsprechende Summation durchgeführt, d.h. es wird die Summe

$$n_3 = \sum_{j=1}^{9} (S_{x(1,j)} - S_{x(7,j)}) + \sum_{i=1}^{6} (S_{y(i,10)} - S_{y(i,1)}) \quad (8)$$

berechnet. Nur dann, wenn alle drei Summen $n_1$, $n_2$ und $n_3$ den Wert Null haben, sind die in den

7

Teilfeldern (45, 46, 47) beobachteten Inkonsistenzen der Datenwerte auf diese Teilfelder lokalisiert. In diesem Fall können wiederum in den unmaskierten Datenpunkten endgültige Phasenwerte durch Wegintegration über die Differenzen ($S_{x(i,j)}$, $S_{y(i,j)}$) eindeutig berechnet werden. Andernfalls, wenn die Summe von Null verschiedene Werte haben, so werden die zugehörigen Teilfelder durch Maskierung der zwischenliegenden Datenpunkten derart vereinigt, daß die Summe um das vereinigte Teilfeld verschwindet. Liefert die Summe $n_3$ um den Rand (48) des zweidimensionalen Datenfeldes (53) einen von Null verschiedenen Wert, so wird der Rand des zweidimensionalen Datenfeldes mit einem Loch im Inneren des Datenfeldes verbunden. Es ist immer möglich, die Löcher untereinander oder gegebenenfalls die Löcher mit dem Rand derart zu verbinden, daß die Summe um das vereinigte Teilfeld verschwindet.

In der Fig. 3c ist der Fall dargestellt, daß die Summe $n_1$ und $n_2$ von Null verschiedene Werte haben und daß die Summe $n_3$ um den Rand des zweidimensionalen Datenfeldes den Wert Null hat. In diesem Fall werden die Punkte P(3, 5) und P(3, 6) zusätzlich maskiert. Die Datenpunkte P(3, 5) und P(3, 6) liegen auf der kürzesten Verbindung zwischen dem Teilfeld (45) einerseits und den beiden anderen Teilfeldern (46, 47) andererseits.Dann hat die Summe entlang des durch die durchgezogene Linie gekennzeichneten Weges (52) um das vereinigte Teilfeld, den Wert Null.

Die endgültigen Phasenwerte können dann durch Wegintegration über die Differenzen ($S_{x(i,j)}$, $S_{y(i,j)}$) der Phasenwerte berechnet werden, wobei bei diesen Wegintegralen ein gemeinsamer Anfangspunkt zu wählen ist. Wählt man beispielsweise den Datenpunkt (P(7, 1)) als den gemeinsamen Bezugspunkt und setzt den endgültigen Phasenwert in diesem Punkt gleich Null, so ergibt sich der endgültige Phasenwert V(4,5), im Datenpunkt P(4, 5) entlang des strichpunktiert eingezeichneten Weges (55) zu

$$V(4,5) = \sum_{j=1}^{4} S_{x(7,j)} - \sum_{i=4}^{6} S_{y(i,5)} \qquad (9).$$

Diese endgültigen Phasenwerte in den nicht maskierten Datenpunkten sind von dem Integrationsweg unabhängig, solange nicht über maskierte Datenbereiche hinweg integriert wird. Nachdem für alle nicht maskierten Datenpunkte P(i,j) endgültige und eindeutige Phasenwerte V(i,j) berechnet sind, werden ausgehend von diesen eindeutigen Phasenwerten V(i,j) durch eine lokale Integration, d.h. durch Hinzuaddieren der jeweiligen Modulo $2\pi$ dargestellten Differenzen der Phasenwerte auch in den maskierten Datenpunkten endgültige Phasenwerte V(i,j) berechnet. Beispielsweise kann zu dem maskierten Datenpunkt P(3,5) ein endgültiger Phasenwert V(3,5) = V(4,5) - Sy(3,5) berechnet werden. Diese endgültigen Phasenwerte V(i,j) in den maskierten Datenpunkten sind jedoch nicht unbedingt eindeutig, jedoch ist durch das zuvor beschriebene Verfahren sichergestellt, daß inkonsistente Meßwerte nicht die Phasenkarte global verfälschen.

Das zweidimensionale Datenfeld aus den Fig. 3a - 3c, das lediglich aus 70 Datenpunkten besteht dient nur zur Erläuterung des erfindungsgemäßen Verfahrens. In praktischen Anwendungsfällen sind weitaus größere Datenfelder vorgesehen. Die lichtempfindliche Fläche handelsüblicher CCD-Kameras besteht beispielsweise aus 512 x 512 bzw. 1024 x 1024 einzelnen lichtempfindlichen Dioden. Jede Diode stellt dann einen Datenpunkt des zweidimensionalen Datenfeldes dar.

Anhand der Fig. 1a wurde das erfindungsgemäße Verfahren lediglich am Beispiel interferometrischer Oberflächenuntersuchungen beschrieben. Das erfindungsgmäße Verfahren ist jedoch bei allen streifengebenden Meßverfahren, bei denen aus dem Streifenmuster Phasenwerte Module $2\pi$ berechnet werden vorteilhaft einsetzbar.

## Patentansprüche

1. Verfahren zur optischen Untersuchung von Prüflingen anhand eines zweidimensionalen, die Information über den Prüfling enthaltenden und von einer Kamera (9) aufgezeichneten Musters, das in Form eines zweidimensionalen Feldes (53) von Datenpunkten (P(i,j)) ausgewertet wird, wozu aus den Intensitätswerten des Musters zu den Datenpunkten (P(i,j)) gehörige erste Phasenwerte berechnet, die Differenzen dieser ersten Phasenwerte sowohl zeilenweise benachbarter Datenpunkte (P(i,j), P(i,j+1)) als auch spaltenweise benachbarter Datenpunkte (P(i,j), P(i+1,j) gebildet und Modulo $2\pi$ dargestellt, sowie zur Unterdrückung inkonsistenter Meßwerte eine erste vorzeichenkorrekte Summe dieser Modulo $2\pi$ dargestellten Differenzen der ersten Phasenwerte entlang geschlossener Wege um Teilfelder (54) des zweidimensionales Feldes berechnet werden und die Datenpunkte auf und innerhalb der geschlossenen Wege maskiert werden, falls diese erste Summe ungleich Null ist, wobei diese maskierten Datenpunkte bei der weiteren Auswertung nicht berücksichtigt werden, dadurch gekennzeichnet, daß jeweils eine

EP 0 453 880 A2

zweite vorzeichenkorrekte Summe der Modulo $2\pi$ dargestellten Differenzen der ersten Phasenwerte auf einem Weg (48, 49) um die maskierten Teilfelder (45, 46, 47) herum berechnet wird und das solche Teilfelder (45, 46, 47), für die diese zweite Summe nicht verschwindet, durch Maskierung der zwischen diesen Teilfeldern liegenden Datenpunkte (P(3,5), P(3,6)) zu einem vereinigten Teilfeld derart vereinigt werden, daß diese zweite Summe auf einem Weg (52) um das vereinigte Teilfeld herum verschwindet.

2. Verfahren nach Anspruch 1, dadurch gekennzeichnet, daß zur Vereinigung der Teilfelder (45, 46, 47) der kürzeste Weg zwischen diesen Teilfeldern (45, 46, 47) gewählt wird.

3. Verfahren nach Anspruch 1, dadurch gekennzeichnet, daß jedes Teilfeld vier Datenpunkte (P(i,j), P-(i+1,j) P(i,j+1) P(i+1,j+1)) enthält, wobei die ersten zwei Datenpunkte (P(i,j) P(i,j+1)) zeilenweise benachbart und die beiden anderen Datenpunkte (P(i,j), P(i+1,j+1)) jeweils zu einem der ersten beiden Datenpunkte (P(i,j) P(i,j+1)) spaltenweise benachbart sind.

4. Verfahren nach Anspruch 1, dadurch gekennzeichnet, daß solche Datenpunkte, die nicht zumindestens zu einem Teilfeld gehören, maskiert werden.

5. Verfahren nach Anspruch 4, dadurch gekennzeichnet, daß eine weitere vorzeichenkorrekte Summe der Modulo $2\pi$ dargestellten Differenzen der ersten Phasenwerte entlang des geschlossenen Weges (48) über die äußersten, unmaskierten Datenpunkte des zweidimensionales Feldes (53) berechnet wird und daß, wenn diese weitere Summe nicht verschwindet, dieser Rand (48) des zweidimensionalen Feldes mit mindestens einem der Teilfelder, für die die zweite Summe nicht verschwindet durch Maskierung der dazwischen liegenden Datenpunkte derart vereinigt wird, daß die vorzeichenkorrekte Summe der Modulo $2\pi$ dargestellten Differenzen der ersten Phasenwerte auf einem geschlossenen Weg um das vereinigte Teilfeld verschwindet.

6. Verfahren nach Anspruch 5, dadurch gekennzeichnet, daß zu jedem unmaskierten Datenpunkt (P(4,5)) ein endgültiger Phasenwert berechnet wird, wobei sich dieser endgültige Phasenwert durch Summation der Modulo $2\pi$ dargestellten Differenzen der ersten Phasenwerte entlang eines Weges (55) über unmaskierte Datenpunkte von einem gemeinsamen Bezugspunkt (P(7,1)) zu dem jeweiligen Datenpunkt (P(4,5)) ergibt.

7. Verfahren nach Anspruch 6, dadurch gekennzeichnet, daß ausgehend von den endgültigen Phasenwerten in den unmaskierten Datenpunkten (P(4,5)) durch Hinzuaddieren der Modulo $2\pi$ dargestellten Differenzen der ersten Phasenwerte endgültige Phasenwerte in den maskierten Datenpunkten (P(3,5)) berechnet werden.

8. Verfahren nach Anspruch 1, dadurch gekennzeichnet, daß das Muster ein Interferogramm ist.

9

# Fig.1a

Fig.1b

EP 0 453 880 A2

## Fig. 1c

| Maskenfeld | ~23 |

39

```
P(i.j) gehört zu
mindestens einem
Teilfeld?
```

ja    nein

40

```
Maskiere
zusätzlich
P(i.j).
neues
Maskenfeld
```

~20a

19a    19b

| x-Diff | y-Diff |

30

$$Sum = S_{x(i,j)} + S_{y(i,j+1)} - S_{x(i+1,j)} - S_{y(i,j)} = 0?$$

31

ja    nein

```
Maskiere Datenpunkte
P(i,j). P(i+1,j) P(i,j+1), P(i+1,j+1)
```
32

```
Lege Liste aller Löcher an
Berechne Wegintegrall n für alle Löcher
und zugehörige Weglänge l
```
33

Wiederhole bis alle n = 0 zeigen — 34

```
Start bei Loch mit n ≠ 0
und kleinstem l
```
35

```
Finde nächstes Loch und kürzeste
Verbindung beider Löcher
```
36

Maskiere Datenpunkte auf der Verbindung — 37

Erzeuge neue Löcherliste — 38

Fig.2

Fig.3a

Fig. 3b

Fig. 3c